# FASCICULE DE BREVET EUROPEEN

(11) **EP 3 024 799 B1**
(45) Date de publication et mention de la délivrance du brevet: **03.10.2018**
(21) Numéro de dépôt: 14755159.2
(22) Date de dépôt: 18.07.2014
(51) Int. Cl.: C04B 35/101, C04B 35/106, C04B 35/66, C04B 35/185, C04B 35/443, C04B 35/482, F23M 5/00, F23R 3/00, C01B 3/02, B01J 19/02, C04B 38/06

(54) **PRODUIT A HAUTE TENEUR EN ALUMINE**
PRODUKT MIT HOHEM TONERDEGEHALT
PRODUCT HAVING A HIGH ALUMINA CONTENT

(30) Priorité: 26.07.2013 FR 1357374
(43) Date de publication de la demande: 01.06.2016
(73) Titulaire: Saint-Gobain Centre de Recherches et d'Etudes Européen, 92400 Courbevoie (FR)
(72) Inventeur: SAN-MIGUEL, Laurie, F-84210 Althen des Paluds (FR); RODRIGUES, Fabiano, F-84220 Roussillon (FR); HIS, Christian, F-84300 Cavaillon (FR); CHAMPION, Thibault, F-84660 Maubec (FR)
(74) Mandataire: Nony
(86) Numéro de dépôt international: PCT/IB2014/063227
(87) Numéro de publication internationale: WO 2015/011623

(56) Documents cités:
- EP-A2- 1 428 807
- WO-A1-2005/085155
- WO-A1-2011/135517
- US-A- 3 226 241
- US-A- 3 449 084
- US-A- 5 403 794
- BUCHEL G ET AL: "Bonite - A new raw material alternative for refractory innovations", UNITECR '05 ; PROCEEDINGS OF THE UNIFIED INTERNATIONAL TECHNICAL CONFERENCE ON REFRACTORIES: 9TH BIENNIAL WORLDWIDE CONGRESS ON REFRACTORIES (UNITECR '05 - UNIFIED INTERNATIONAL TECHNICAL CONFERENCE ON REFRACTORIES: 9TH BIENNIAL WORLDWIDE CONGRESS ON, 2005, pages 462-467, XP008137739, ISBN: 1-57498-265-6
- "High alumina refractories", HARBISON-WALKER HANDBOOK OF REFRACTORY PRACTICE, 2005, pages CR-7-CR-8, XP002721611, Extrait de l'Internet: URL:http://www.somitmurni.com/Handbook.pdf [extrait le 2014-03-12]

## Description

### Domaine technique

L'invention concerne un produit réfractaire à haute teneur en alumine comportant un granulat lié par une matrice comportant de l'alumine.

L'invention concerne aussi un dispositif, et en particulier une turbine à gaz, comportant un revêtement réfractaire en un produit selon l'invention.

### Arrière-plan technologique

L'alumine peut se présenter sous plusieurs formes, en fonction de son procédé de fabrication.

La fusion de bauxite permet d'obtenir de l'alumine appelée « corindon brun ». Le corindon brun comporte typiquement une teneur en oxyde de fer de l'ordre de 0,2 à 1% pour les produits les plus purs.

Alternativement, suivant le procédé BAYER, la bauxite peut être traitée avec de la soude, puis calcinée afin d'assurer une purification. Il reste cependant toujours de la soude, typiquement à des teneurs de l'ordre 0,1 à 0,3% de Na₂O. L'alumine obtenue est appelée classiquement « alumine calcinée ».

L'alumine calcinée peut être broyée jusqu'à obtenir une taille médiane typiquement d'environ 0,5 à 50 microns, voire 0,3 à 10 microns. L'alumine obtenue, dite « réactive », est classiquement utilisée pour la fabrication de céramiques techniques.

Le frittage de particules d'alumine calcinée permet de fabriquer des particules grossières ou fines, présentant généralement la forme de plaquettes. L'alumine ainsi obtenue est appelée « alumine tabulaire ». L'alumine réactive comporte, comme l'alumine tabulaire et l'alumine calcinée, une quantité relativement élevée de soude.

L'alumine calcinée peut être également fondue afin de fabriquer de l'alumine appelée « corindon blanc », qui comporte également une quantité élevée de soude, typiquement d'environ 0,2 à 0,4%.

Au-delà de ces alumines conventionnelles, des fabricants comme Aluchem Inc. fournissent des poudres d'alumine très pures, comportant moins de 0,1% de soude, Ces alumines typiquement utilisées pour des applications catalytiques ou la fabrication de monocristaux.

Les produits réfractaires frittés à haute teneur en alumine comportant un granulat de mullite et/ou d'alumine tabulaire lié par une matrice alumineuse sont connus.

Ce type de produit réfractaire peut notamment former tout ou partie du revêtement intérieur de la chambre de combustion d'une turbine à gaz. Le revêtement présente alors typiquement entre 10% et 50% en masse de mullite, 50 à 90% d'alumine et moins de 5% de silice. Le revêtement est soumis à des contraintes thermomécaniques très élevées ainsi qu'à une corrosion importante par les gaz de combustion, et en particulier par de la vapeur d'eau à haute température. Celle-ci conduit en particulier à une décomposition de la mullite et à une attaque de la phase vitreuse silicatée.

US 3 067 050 décrit un matériau réfractaire réalisé à partir d'un mélange de 72 à 90% d'alumine et moins de 10% de silice amorphe, cuit à 1500°C environ.

US 2009/0181257 décrit un matériau destiné à une chambre de combustion d'une turbine à gaz.

US 5 403 794 décrit un produit réfractaire à base d'alumine et de zircone.

WO 2005/085155 A1 décrit un mélange céramique à base réfractaire.

WO 2011/135517 A1 décrit une poudre réfractaire comportant des grains de mullite revêtus.

L'article "High Alumina Refractories" de Harbison-Walker, Handbook of Refractory Practice, 2005, CR-7-CR-8, décrit des briques réfractaires à haute teneur en alumine. Un but de la présente invention est de fournir un produit à haute teneur en alumine présentant une résistance thermomécanique, et en particulier une résistance à la flexion à haute température, améliorée, et une résistance élevée à la corrosion, notamment par la vapeur d'eau et les gaz présents dans une turbine à gaz.

### Résumé de l'invention

Selon l'invention, ce but est atteint au moyen d'un produit réfractaire fritté présentant la forme d'un bloc et constitué d'un granulat constitué par l'ensemble des grains présentant une taille supérieure à 100 µm, dits « grains grossiers », et d'une matrice liant lesdits grains grossiers et constituée des grains présentant une taille inférieure ou égale à 100 µm, le granulat représentant entre 45% et 90% en masse du produit, ledit produit présentant une composition telle que, en pourcentage massique sur la base des oxydes :
- Al₂O₃ > 80%.
- SiO₂ < 15%,
- Na₂O < 0,15%
- Fe₂O₃ < 0,05%,
- CaO < 0,1%,
- les autres oxydes, c'est-à-dire les oxydes autres que Al₂O₃, SiO₂, Na₂O, K₂O, Fe₂O₃, et CaO, constituant le complément à 100%,
la teneur en Na₂O dans la matrice étant supérieure à 0,010%, en pourcentage massique sur la base de la masse du produit.

Les inventeurs ont découvert que, de façon remarquable, un produit selon l'invention présente un module de rupture en flexion (MOR) à 1400°C très élevé sans réduction des performances de résistance à la corrosion. Plus précisément, le gain en MOR à cette température est d'environ 25% par rapport à celui mesuré sur des produits à teneur en alumine équivalente mais présentant une teneur en Na₂O supérieure à 0,15%. Cette découverte, inexpliquée, est d'autant plus surprenante qu'à des températures inférieures à 1200°C cette différence est imperceptible.

Les inventeurs ont également découvert qu'il était avantageux que la matrice comporte du Na₂O en une teneur supérieure à 0,010%, en pourcentage massique sur la base de la masse du produit, pour obtenir un module de rupture en flexion suffisamment élevé.

Un produit selon l'invention peut encore comporter une ou plusieurs des caractéristiques optionnelles suivantes :
- La composition est telle que Na₂O + K₂O < 0,20% ;
- La composition est telle que
   - Al₂O₃ > 85% et/ou
   - 3% < SiO₂ < 10% et/ou
   - Na₂O + K₂O < 0,15% et/ou
   - Fe₂O₃ < 0,03% et/ou
   - CaO < 0,05% et/ou
   - ZrO₂ < 5% et/ou
   - TiO₂ < 5% ;
- La composition est telle que
   - Al₂O₃ > 90% et/ou
   - SiO₂ > 7% et/ou
   - Na₂O < 0,12% et/ou
   - ZrO₂ < 1% et/ou
   - TiO₂ < 1% ;
- La teneur en Na₂O dans le granulat d'alumine est inférieure à 0,070%, en pourcentage massique sur la base de la masse du granulat ;
- La quantité totale d'alumine d'une part et de mullite et/ou de spinelle et/ou de mullite-zircone d'autre part est supérieure à 95%, en pourcentage massique sur la base de la masse des phases cristallisées ;
- La quantité de mullite est supérieure à 10% et inférieure à 50%, en pourcentage massique sur la base de la masse des phases cristallisées ;
- La porosité ouverte est supérieure à 10% et inférieure 30%, de préférence inférieure à 25%, inférieure à 20% en volume ; inférieure à 19% en volume ;
- La distribution de taille de pores, mesurée au porosimètre à mercure, est telle que
   - P₅₀ est supérieur à 1 µm et inférieur à 20 µm, et/ou
   - P₈₀ est supérieur à 10 µm et inférieur à 50 µm, et/ou
   - P₉₀ est supérieur à 30 µm et inférieur à 70 µm ;
- Le granulat est constitué, pour plus de 90% en masse des grains grossiers de mullite et/ou de grains grossiers d'alumine et/ou de grains grossiers de spinelle et/ou de grains grossiers de mullite-zircone ;
- La matrice est constituée pour plus de 90% en masse d'alumine ;
- Les grains présentant une taille inférieure ou égale à 100 µm et supérieure à 10 µm représentent plus de 10% et moins de 30% de la masse du produit et/ou les grains présentant une taille inférieure ou égale à 10 µm représentent plus de 10% et moins de 30 % de la masse du produit.

L'invention concerne aussi un procédé de fabrication d'un produit réfractaire selon l'invention sous la forme d'un bloc fritté, en particulier d'une tuile réfractaire, ledit procédé de fabrication comportant les étapes successives suivantes :
a) préparation d'une charge de départ adaptée à la fabrication d'un produit selon l'invention ;
b) coulage de ladite charge de départ dans un moule et compaction de ladite charge de départ de manière à former une préforme ;
c) démoulage de la préforme ;
d) séchage de ladite préforme ;
e) frittage de ladite préforme.

L'invention concerne également un dispositif choisi dans le groupe formé par une turbine à gaz, un réacteur chimique, notamment un réacteur de reformage secondaire, en particulier pour la fabrication d'ammoniac ou de méthane, les supports pour la cuisson notamment de céramiques, les superstructures de four verriers, ledit dispositif comportant une paroi au moins en partie constituée par un produit selon l'invention.

### Définitions

- Par « bloc », on entend un objet solide qui n'est pas une particule. Il peut s'agir en particulier une brique et plus particulièrement une plaque ou une tuile réfractaire.
- Par « particule », on entend un objet solide dont la taille est inférieure à 10 mm. On distingue en particulier les particules présentant une taille supérieure à 100 µm, appelées « particules grossières », celles présentant une taille inférieure ou égale à 100 µm et supérieure à 10 µm, appelées « particules fines », et celles présentant une taille inférieure ou égale à 10 µm, appelées « particules ultrafines ». L'ensemble des particules grossières constitue la « fraction grossière ». L'ensemble des particules fines constitue la « fraction fine ». L'ensemble des particules ultrafines constitue la « fraction ultrafine ». Les particules fines et ultrafines sont collectivement appelées « particules matricielles » et constituent la « fraction matricielle ».

Lors de la fabrication d'un produit fritté, les particules sont liées les unes aux autres. Les « grains » correspondent sensiblement, dans le produit fritté, aux particules dans la charge de départ. La taille des grains et leur distribution de taille dans le produit peuvent être évaluées par la taille et la distribution granulométrique des poudres de particules dans la charge de départ, mesurée par exemple par un granulomètre laser.
- Un ensemble de particules forme une « poudre ».
- La taille des particules d'une poudre est évaluée classiquement par une caractérisation de distribution granulométrique réalisée avec un granulomètre laser. Le granulomètre laser peut être, par exemple, un Partica LA-950 de la société HORIBA.
- Les percentiles ou « centiles » 10 (A₁₀), 50 (A₅₀), 90 (A₉₀) et 99,5 (A_{99,5}), et plus généralement « n » Aₙ d'une propriété A d'une population, par exemple d'une population de particules ou de pores sont les valeurs de cette propriété correspondant aux pourcentages de 10%, 50%, 90%, 99,5% et n%, respectivement, sur la courbe de distribution cumulée relative à cette propriété, les valeurs relatives à cette propriété étant classées par ordre croissant. En particulier, les percentiles Dₙ, et Pₙ, sont relatifs à des tailles de particules et à des tailles de pores, respectivement.

En fonction de la propriété considérée, les pourcentages peuvent être en masse, par exemple pour les percentiles Dₙ ou en volume, par exemple pour les percentiles Pₙ.

Le percentile 50 est classiquement appelé le percentile « médian ». Par exemple, le percentile D₅₀ est conventionnellement appelé « taille médiane » des particules. Par exemple, 10 %, en masse, des particules de la poudre ont une taille inférieure à D₁₀ et 90 % des particules en masse ont une taille supérieure ou égale à D₁₀.

Les percentiles relatifs à la taille des particules peuvent être déterminés à l'aide d'une distribution granulométrique réalisée à l'aide d'un granulomètre laser.

De même, par exemple, 10% en volume des pores d'un produit ont une taille inférieure à P₁₀ et 90% des pores en volume ont une taille supérieure ou égale à P₁₀. Ces percentiles peuvent être déterminés suivant la norme ISO 15901 -1.2005 part 1, à l'aide d'une distribution réalisée par porosimétrie au mercure, par exemple au moyen d'un porosimètre à mercure Autopore IV série 9500 Micromeritics
- La distribution granulométrique d'un mélange particulaire d'oxydes d'une charge de départ permet d'évaluer les dimensions des grains dans le produit fritté correspondant.
- On appelle « frittage » la consolidation par traitement thermique à plus de 1100°C d'une préforme, avec éventuellement une fusion, partielle ou totale, de certains de ses constituants (mais pas de tous ses constituants, de sorte que la préforme n'est pas transformée en une masse liquide).
- Par « réfractaire », on entend « présentant un point de fusion ou de dissociation supérieur à 1000°C ».
- Par « impuretés», on entend les constituants inévitables, introduits involontairement et nécessairement avec les matières premières ou résultant de réactions avec ces constituants. Les impuretés ne sont pas des constituants nécessaires, mais seulement tolérés.
- Sauf indication contraire, tous les pourcentages relatifs à des teneurs sont des pourcentages massiques sur la base des oxydes.
- « Na₂O + K₂O » signifie la somme des teneurs en Na₂O et en K₂O, chacun de ces deux oxydes étant optionnels.
- La teneur massique d'un constituant est classiquement exprimée sous la forme de l'oxyde le plus stable. Les appareils classiquement utilisés pour déterminer les compositions (microsonde, fluorescence X, ICP « inductive coupled plasma spectroscopie »en anglais ou « spectrométrie d'émission à plasma induit » en français) convertissent automatiquement les teneurs des constituants non oxydes en teneurs oxydes équivalentes.
- Lorsqu'il est fait référence à ZrO₂ ou à (ZrO₂+HfO₂), il y a lieu de comprendre ZrO₂ et des traces de HfO₂. En effet, un peu de HfO₂, chimiquement indissociable du ZrO₂ et présentant des propriétés semblables, est toujours naturellement présent dans les sources de ZrO₂ à des teneurs généralement inférieures à 3%, en pourcentage massique sur la base de ZrO₂+HfO₂. L'oxyde d'hafnium n'est pas considéré comme une impureté.
- Dans un souci de clarté, on utilise les formules chimiques des oxydes pour exclusivement désigner les teneurs de ces oxydes dans la composition. Par exemple « ZrO₂ », « HfO₂ », « SiO₂ » ou « Al₂O₃ » désignent les teneurs de ces oxydes dans la composition et « zircone », « hafnie », « silice » et « alumine » sont exclusivement utilisés pour désigner des phases cristallisées de ces oxydes constituées de ZrO₂, de HfO₂, de SiO₂ et de Al₂O₃, respectivement. Ces oxydes peuvent cependant être également présents sous d'autres phases, en particulier sous forme de mullite.
- La silice « libre » désigne classiquement une phase de SiO₂ dont les molécules ne sont pas associées à d'autres molécules, par exemple sous forme de silicate réfractaire, notamment du zircon ou de la mullite.
- Par « contenant un », « comprenant un » ou « comportant un », on entend « comportant au moins un », sauf indication contraire.

### Description détaillée

### Produit

Le produit peut en particulier se présenter sous la forme d'un bloc, et en particulier sous la forme d'une plaque ou d'une tuile. De préférence, l'épaisseur du bloc est inférieure à 60 mm, inférieure à 50 mm, inférieure à 40 mm, voire inférieure à 30 mm et/ou supérieure à 10 mm, de préférence supérieure à 15 mm. De préférence, la longueur et/ou la largeur du bloc est supérieure à 10 cm, supérieure à 20 cm et/ou inférieure à 50 cm, de préférence inférieure à 40 cm.

Le bloc peut également se présenter sous la forme d'une brique, et en particulier d'une brique sensiblement parallélépipédique. La longueur de la brique peut être supérieure à 15 cm, voire supérieure à 20 cm et/ou inférieure à 35 cm, inférieure à 30 cm, voire inférieure à 25 cm. La largeur et/ou l'épaisseur de la brique est de préférence supérieure à 4 cm, supérieure à 5 et/ou inférieure à 10 cm, voire inférieure à 8 cm.

### Composition

De préférence, les oxydes représentent plus de 90%, plus de 95%, plus de 99%, voire sensiblement 100% de la masse du produit.

SiO₂, K₂O, Fe₂O₃, et CaO sont des oxydes optionnels.

De préférence,
80% < Al₂O₃ < 95%
2% < SiO₂ < 15%
0,01% < Fe₂O₃ < 0,05%
0,05% < Na₂O + K₂O < 0,20%, avec 0,03% < Na₂O < 0,15%,
CaO < 0,1%,
les autres oxydes constituant le complément à 100%.

De préférence, Al₂O₃ > 85% et/ou SiO₂ < 10% et/ou Na₂O + K₂O < 0,15% et/ou Fe₂O₃ < 0,03% et/ou CaO < 0,05% et/ou Na₂O < 0,15% et/ou ZrO₂ < 5% et/ou TiO₂ < 5%.

De préférence, SiO₂ > 3% et/ou Na₂O < 0,12% et/ou ZrO₂ < 1% et/ou TiO₂ < 1%. Dans un mode de réalisation Al₂O₃ > 90%.

De préférence, SiO₂ > 3%, de préférence SiO₂ > 5%, de préférence SiO₂ > 7%.

De préférence, moins de 20%, moins de 10%, moins de 5%, voire moins de 1% de la silice est libre, en pourcentage massique sur la base de la silice. De préférence la silice non libre se présente, pour plus de 90% en masse, voire sensiblement 100% en masse, sous la forme d'un silicate d'alumine réfractaire, plus particulièrement sous forme de mullite.

De préférence, les autres oxydes sont moins réductibles que Al₂O₃. Ils sont de préférence choisis parmi ZrO₂, TiO₂, MgO, et les terres rares telles que Y₂O₃, CeO₂ et HfO₂.

De préférence, MgO < 1%, de préférence MgO < 0,5%, de préférence MgO < 0,2%, de préférence MgO < 0,1%, de préférence MgO < 0,05%, de préférence MgO < 0,01%.

De préférence, ZrO₂ < 0,01%, voire ZrO₂ < 0,005%.

De préférence, TiO₂ < 0,01%, de préférence TiO₂ < 0,004%.

### Microstructure

Une analyse à la microsonde d'un produit selon l'invention montre que la matrice est moins riche en sodium que pour un produit présentant une teneur globale en Na₂O supérieure à 0,15%. Sans pouvoir l'expliquer par une théorie, il semble que le Sodium diffuse pendant la cuisson ou le frittage depuis les grains d'alumine tabulaire vers la matrice, sans interagir avec la mullite.

De manière surprenante, les inventeurs ont cependant découvert que la présence d'une teneur minimale de Na₂O spécifiquement dans la matrice était avantageuse pour la résistance à la flexion.

De préférence, la quantité totale d'alumine d'une part et de mullite et/ou de spinelle et/ou de mullite-zircone d'autre part, de préférence la quantité totale d'alumine et de mullite, est supérieure à 95%, de préférence supérieure à 99%, voire sensiblement de 100%, sur la base de la masse totale du produit réfractaire fritté.

De préférence, la quantité de mullite est supérieure à 10%, supérieure à 20%, supérieure à 30% et/ou inférieure à 50%, inférieure à 40%.

La présence de mullite est particulièrement avantageuse pour une application dans une turbine à gaz. De préférence, la mullite est une mullite électrofondue.

De préférence, la quantité d'alumine (phase Al₂O₃) est supérieure à 50%, supérieure à 55%, supérieure à 60% et/ou inférieure à 80%, inférieure à 70%.

La porosité ouverte est de préférence inférieure à 20% en volume, et/ou de préférence supérieure à 10% en volume, voire supérieure à 15% en volume. La résistance aux chocs thermiques et au cyclage thermique en est améliorée.

De manière avantageuse, la distribution de taille de pores, mesurée au porosimètre à mercure, est telle que
- P₅₀ est supérieur à 1 µm, supérieur à 5 µm, supérieur à 10 µm, et/ou inférieur à 20 µm, inférieur à 15 µm, de préférence compris entre 10 et 20 µm, et/ou
- P₈₀ est supérieur à 10 µm, supérieur à 20 µm, supérieur à 25 µm, et/ou inférieur à 50 µm, inférieur à 40 µm, voire inférieur à 35 µm, et/ou
- P₉₀ est supérieur à 30 µm, supérieur à 40 µm, supérieur à 45 µm, et/ou inférieur à 70 µm, inférieur à 60 µm, voire inférieur à 55 µm.

### Granulat

La présence d'une quantité de granulat supérieure à 45% améliore avantageusement la tenue aux chocs thermiques.

Le granulat représente de préférence plus de 50%, plus de 55% et/ou moins de 85%, moins de 80%, moins de 70%, moins de 60% de la masse du produit.

### Composition

De préférence, le granulat est constitué, pour plus de 90%, plus de 95%, voire sensiblement 100% en masse des grains grossiers de mullite (72-80% Al₂O₃/20-28% SiO₂ environ) et/ou de grains grossiers d'alumine quasiment pure (> 99,5% Al₂O₃), en particulier d'alumine tabulaire, et/ou de grains grossiers de spinelle et/ou de grains grossiers de mullite-zircone.

De préférence, plus de 80%, plus de 90%, plus de 95%, voire sensiblement 100% de la mullite et/ou du spinelle (MgAl₂O₄) et/ou de la mullite-zircone (37% ZrO₂; 17% SiO₂; 46% Al₂O₃ en pourcentages massiques) du produit est présente dans le granulat.

La teneur en Na₂O + K₂O, de préférence la teneur en Na₂O, dans le granulat est de préférence inférieure à 0,14%, de préférence inférieure à 0,12%, de préférence inférieure ou égal à 0,11%, voire inférieure à 0,09%, en pourcentage massique sur la base de la masse du produit.

La teneur en Na₂O + K₂O, de préférence la teneur en Na₂O, dans le granulat, de préférence la teneur dans le granulat d'alumine, en particulier d'alumine tabulaire, est de préférence inférieure à 0,070%, de préférence inférieure à 0,050%, de préférence inférieure à 0,040%, de préférence inférieure à 0,030%, en pourcentage massique sur la base de la masse du granulat. Avantageusement, un granulat très pur confère des performances améliorées.

De préférence, plus de 90%, plus de 95%, voire sensiblement 100% en masse du SiO₂ du produit est dans le granulat, de préférence dans des grains grossiers de mullite. Ceci implique notamment que peu ou pas d'argile est utilisé dans la charge de départ destinée à la fabrication du produit selon l'invention.

### Distribution granulométrique

De préférence, le percentile D₉₀ du granulat est inférieur à 5 mm, de préférence inférieur à 3 mm, de préférence inférieur à 2 mm, de préférence inférieur à 1 mm et/ou supérieur à 0,2 mm, de préférence supérieur à 0,3 mm, de préférence supérieur à 0,4 mm.

La taille médiane D₅₀ du granulat est de préférence inférieure à 2 mm, de préférence inférieure à 1 mm et/ou supérieure à 0,2 mm, de préférence supérieure à 0,3 mm.

### Matrice

### Composition

La matrice est de préférence constituée pour plus de 90%, plus de 95%, voire sensiblement 100% en masse d'alumine, de préférence d'alumine tabulaire et/ou calcinée. De préférence, la matrice ne comporte sensiblement pas de silice.

La teneur en Na₂O dans la matrice est de préférence supérieure à 0,015%, de préférence supérieure à 0,020%, et/ou de préférence inférieure à 0,14%, de préférence inférieure à 0,1%, de préférence inférieure à 0,09%, de préférence inférieure à 0,08%, en pourcentage massique sur la base de la masse du produit.

Une telle plage de teneur en Na₂O permet d'obtenir un produit présentant des propriétés thermomécaniques satisfaisantes, dans des conditions de frittage économiques (pression atmosphérique, température réduite, typiquement à une température inférieure à 1700°C, voire inférieure ou égale à 1650°C, sous atmosphère oxydante, de préférence sous air, en four intermittent ou continu).

### Distribution granulométrique

Les grains présentant une taille inférieure ou égale à 100 µm et supérieure à 10 µm représentent de préférence plus de 10%, plus de 15% et/ou moins de 25%, moins de 20% de la masse du produit.

Les grains présentant une taille inférieure ou égale à 10 µm représentent de préférence plus de 10%, plus de 15% voire plus de 20% et/ou moins de 30%, moins de 27% de la masse du produit.

### Procédé de fabrication

Les étapes a) à e) sont des étapes classiquement mises en oeuvre pour fabriquer des produits frittés.

**A l'étape a),** la charge de départ contient un mélange particulaire d'oxydes constitué de particules ultrafines, de particules fines et de particules grossières.

La façon de déterminer les quantités des oxydes dans la charge de départ en fonction de leurs teneurs dans le produit à fabriquer est parfaitement connue de l'homme du métier. En particulier, l'homme du métier sait que les oxydes réfractaires présents dans la charge de départ se retrouvent dans le produit réfractaire fritté. Pour un même produit réfractaire, la composition de la charge de départ peut cependant varier, notamment en fonction des quantités et de la nature des additifs présents dans la charge de départ.

De préférence, la charge de départ comporte, en pourcentage en masse sur la base des oxydes de la charge de départ :
- plus de 10%, de préférence plus de 20% et/ou moins de 35%, moins de 30%, voire moins de 25% d'alumine calcinée et/ou d'alumine réactive, et/ou
- plus de 30%, plus de 35%, plus de 40% et/ou moins de 55%, moins de 50%, voire moins de 45% d'alumine tabulaire.

La présence d'alumine calcinée et/ou réactive permet avantageusement de limiter la température de frittage.

La charge de départ comporte de préférence plus de 1%, de préférence plus de 1,5%, en pourcentages en masse sur la base des oxydes, de particules d'alumine tabulaire présentant une taille inférieure à 2mm.

De préférence, la charge de départ contient moins de 1% en masse de MgO, sur la base des oxydes, de préférence encore ne contient pas de MgO, sauf sous forme d'impuretés, à des teneurs inférieures à 0,5%, de préférence inférieures à 0,2%. Le procédé en est simplifié.

### Fraction grossière

Les particules grossières d'alumine tabulaire, voire l'ensemble des particules grossières, présentent une teneur massique en Na₂O + K₂O, de préférence en Na₂O, inférieure à 1500 ppm, de préférence inférieure à 1000 ppm et de préférence inférieure à 500 ppm, en pourcentages en masse sur la base des oxydes de la charge de départ. Sans être liés par cette théorie, les inventeurs considèrent que cette faible teneur évite une réaction qui conduirait à une phase préjudiciable.

La teneur moyenne massique en Fe₂O₃ des particules grossières est de préférence inférieure à 500 ppm, voire inférieure à 300 ppm.

La fraction grossière comporte de préférence, en pourcentages en masse sur la base des oxydes de la charge de départ :
- plus de 10%, plus de 15%, plus de 20%, et/ou moins de 45%, moins de 35%, moins de 30%, voire moins de 25% de particules d'alumine, de préférence d'alumine tabulaire, et/ou
- plus de 1%, de préférence plus de 5%, plus de 15%, plus de 25%, plus de 30% et/ou moins de 45%, moins de 40% de particules de mullite.

Les particules grossières ont de préférence une taille inférieure à 2 mm.

### Fraction fine

La fraction fine comporte de préférence, en pourcentages en masse sur la base des oxydes de la charge de départ plus de 1%, plus de 5%, plus de 10%, plus de 15%, et/ou moins de 25%, moins de 20% de particules d'alumine tabulaire, lesdites particules présentant de préférence une taille supérieure à 10 µm et inférieure à 100 µm.

La fraction ultrafine comporte de préférence, en pourcentages en masse sur la base des oxydes de la charge de départ, plus de 5%, de préférence plus de 10%, plus de 15%, plus de 20% et/ou moins de 30%, moins de 25% de particules d'alumine calcinée ou réactive.

De préférence, l'ensemble des particules d'alumine calcinée et/ou d'alumine réactive présente une taille médiane D₅₀ inférieure à 10 µm, de préférence inférieure à 5 µm et/ou supérieure à 1 micron, de préférence supérieure à 2 µm.

### Additifs

La charge de départ peut encore contenir un ou plusieurs additifs, sous forme particulaire ou non, classiquement utilisés pour assurer à la charge de départ une plasticité suffisante pendant l'étape b) de mise de mise en forme et pour conférer une résistance mécanique suffisante à la préforme. Les quantités d'additifs ne sont pas limitatives. En particulier, les quantités classiquement mises en oeuvre dans les procédés de frittage connus sont appropriées. Les additifs sont cependant choisis afin que leurs compositions, et en particulier leurs teneurs en alcalins et alcalino-terreux soient compatibles avec la fabrication d'un produit réfractaire conforme à l'invention.

Certains oxydes peuvent être apportés par les additifs. Comme exemples d'additifs utilisables, on peut citer, de façon non limitative :
- des liants temporaires organiques (c'est-à-dire éliminés en tout ou en partie lors des étapes de séchage et de cuisson), tels que des résines, des dérivés de la cellulose ou de la lignone, comme la carboxyméthylcellulose, la dextrine, des polyvinyles alcools, etc. De préférence, la quantité de liant temporaire est comprise entre 0,1 et 6% en masse par rapport à la masse du mélange particulaires d'oxydes de la charge de départ ;
- des liants chimiques, tels que l'acide phosphorique ou le monophosphate d'aluminium ;
- des liants hydrauliques, tels que les ciments alumineux comme le ciment SECAR 71, ou de type aluminate de CaO ;
- des défloculants, tels que des polyphosphates de métaux alcalins ou des dérivés méthacrylates ;
- des promoteurs de frittage tels que le bioxyde de titane (en une proportion n'excédant pas 2% environ de la masse de la charge de départ) ou l'hydroxyde de magnésium ;
- des agents de mise en forme tels que les stéarates de magnésium ou de calcium ;
- des ajouts de type silico-aluminate naturels, par exemple les argiles, ou silico aluminates synthétiques. Ces ajouts, en particulier les argiles naturelles peuvent apporter de l'alumine, de la silice et quelques oxydes de métaux alcalins ou alcalino terreux, voire de l'oxyde de fer.

Dans la charge de départ, de l'eau est également classiquement ajoutée. La quantité d'eau ajoutée, sur la base du mélange particulaire des oxydes, est de préférence inférieure à 5%, inférieure à 4%, voire inférieure à 3%.

Le mélange des différents constituants de la charge de départ est poursuivi jusqu'à obtention d'une charge de départ sensiblement homogène.

**A l'étape b),** la charge de départ est disposée dans un moule, puis compactée, de préférence par vibration et/ou pressage et/ou pilonnage, de manière à former une préforme.

Dans le cas d'une mise en forme par pressage, une pression spécifique de 400 à 800 Kg/cm² est appropriée pour obtenir une pâte non plastique. Le pressage est de préférence effectué de manière uniaxiale ou isostatique, par exemple au moyen d'une presse hydraulique. Il peut être avantageusement précédé d'une opération de damage manuel ou pneumatique et/ou d'une vibration.

**A l'étape d),** le séchage est de préférence effectué sous air ou atmosphère contrôlée en humidité, de préférence à une température comprise entre la température ambiante et 200°C. Il dure de préférence jusqu'à ce que l'humidité résiduelle de la préforme soit inférieure à 0,5%, classiquement entre 10 heures et une semaine selon le format de la préforme.

**A l'étape e),** la préforme séchée est mise à cuire de manière à être frittée. L'opération de frittage est bien connue de l'homme du métier. Le frittage correspond à la consolidation thermique du matériau. Il s'accompagne généralement d'une diminution de la porosité et d'un retrait dimensionnel.

La température de frittage est fonction de la composition de la charge de départ. Une température comprise entre 1300°C et 1800°C est préférée. Le frittage est de préférence effectué sous atmosphère oxydante, de préférence encore sous air. Il est de préférence effectué à pression atmosphérique. La durée de la cuisson, de préférence comprise entre 1 et 15 jours environ de froid à froid, est variable en fonction des matériaux mais aussi de la taille et de la forme des produits réfractaires à fabriquer.

L'étape e) transforme la préforme en un produit réfractaire selon l'invention, particulièrement utile comme tuile réfractaire de chambre de combustion d'une installation industrielle.

A la différence des produits frittés *in situ,* c'est-à-dire frittés après avoir été mis dans leur position de service, par exemple après avoir été projetés sur une paroi à protéger, un produit selon l'invention est de préférence fritté dans un four de cuisson, de sorte que chacune de ses faces est sensiblement chauffée de la même manière, avant qu'il ne soit mis en position de service. On évite ainsi que le gradient de températures dépende du point considéré sur la surface extérieure du bloc. A la différence des produits frittés *in situ,* le produit selon l'invention présente ainsi une densité et une microstructure homogènes dans tout le produit, ce qui permet, en service, de limiter les contraintes thermomécaniques locales et les points de corrosion, d'érosion ou de récession, et donc d'augmenter la durée de vie du produit.

### Applications

La paroi latérale d'une turbine à gaz comporte classiquement une pluralité de blocs, de préférence sous la forme de tuiles, assemblés.

Pour constituer cette paroi latérale, un produit selon l'invention peut être utilisé directement ou être assemblé au moyen de joints de dilatation appropriés, suivant des techniques bien connues de l'homme de l'art.

### Exemples

Les exemples suivants sont fournis à des fins illustratives et ne limitent pas l'invention. Ils ont été fabriqués suivant les étapes a) à e) décrites précédemment. Plus précisément, les matières premières ont été mélangées dans un malaxeur de type Eirich. La charge de départ ainsi obtenue a été pressée de manière uni axiale pour obtenir des préformes de dimensions 210*200*40 mm³ dont la densité relative sur sec était supérieure à 95%. Le frittage a été effectué à 1630°C sous air.

Pour les exemples 2 à 4, le granulat est constitué d'alumine tabulaire (grades T60/T64 fournis par la société Almatis, qui présentent une teneur en Na₂O comprise entre de 1800 et 3000 ppm, soit entre 0,18% et 0,3% massique) et mullite électrofondue 10F fournie par Washington Mills. Dans l'exemple 1, les grades de granulat d'alumine tabulaire fournis par la société Almatis ont été remplacés par les grades correspondant de C99LS fournis par Aluchem Inc qui présentent une teneur en Na₂O entre 350 et 520 ppm, soit entre 0,035% et 0,052% massique.

L'exemple 3 comparatif diffère de l'exemple 2 en ce qu'il comporte une matrice plus chargée en Na₂O par utilisation d'une solution sodée (soude)dans le mélange avant façonnage.

L'exemple 4 comparatif diffère de l'exemple 2 en ce qu'il comporte une source d'alumine fine très pure (PFR40/ P122B) fournie par RTA (Rio Tinto Alcan) contenant notamment moins de Na₂O que la source d'alumine fine de l'exemple 2 (A10/A15SG)

L'exemple 5 comparatif diffère de l'exemple 1 en ce qu'il présente une matrice très pure du fait qu'il met en oeuvre la même source d'alumine fine que celle utilisée dans l'exemple 4 comparatif.

Pour les exemples, le granulat représente 57% de la masse du produit, le complément à 100% étant par définition constitué de la matrice.

Le tableau suivant indique les matières premières, les caractéristiques des produits obtenus et les résultats obtenus.

**Tableau 1**

| **Exemples** | **1** | **2*** | **3*** | **4*** | **5*** |
|---|---|---|---|---|---|
| **Matières premières apportant les oxydes** | | | | | |
| Mélange de particules d'Alumine Tabulaire: taille médiane 350 µm ; taille maximale 1,5mm à partir de grades T60/64 fournis par Almatis | -- | 42 | 42 | 42 | |
| Mélange de particules d'Alumine Tabulaire de taille médiane 350 microns taille maximale 1,5mm à partir de grades C99LS fournis par Aluchem Inc. | 42 | -- | -- | | 42 |
| Mélange de particules d'Alumine calcinée (D₅₀=3,5 microns) à partir de grades A10/15SG fournis par Almatis | 23 | 23 | 23 | | |
| Mélange de particules d'Alumine calcinée (D₅₀=3,5 microns) à partir de grades PFR40/P122B fournies par Rio Tinto Alcan | | | | 23 | 23 |
| Mullite électrofondue grade 10 F Washington Mills | 35 | 35 | 35 | 35 | 35 |
| Total particules minérales | **100** | **100** | **100** | **100** | **100** |

| **Matières premières apportant les oxydes** | | | | | |
|---|---|---|---|---|---|
| Liants organiques et/ou minéraux | +1,5 | +1,5 | +1,5 | +1,5 | +1,5 |
| Solution sodée 1,5 g/litre | 0 | 0 | +2,6 | 0 | 0 |
| Eau | +2,6 | +2,6 | | +2.6 | +2,6 |

| **Composition chimique du produit** | | | | | |
|---|---|---|---|---|---|
| Al₂O₃ +SiO₂(%) | >99,8 | >99,7 | NM | >99,7 | >99,8 |
| Na₂O (%) | 0,10 | 0,17 | 0,68 | 0,16 | 0,085 |
| K₂O (%) | 0,004 | 0,004 | NM | 0,004 | 0,004 |
| Fe₂O₃ (%) | 0,016 | 0,023 | NM | 0,017 | 0,007 |
| CaO (%) | 0,03 | 0,03 | NM | <0,03 | 0,01 |
| MgO (%) | 0,008 | 0,008 | NM | 0,007 | 0,003 |
| ZrO₂ (%) | 0,006 | 0,004 | NM | 0,006 | 0,005 |

| **Composition chimique de la matrice en pourcentage massique du produit** | | | | | |
|---|---|---|---|---|---|
| Na₂O (%) | 0,02 | 0,03 | 0,54 | 0,02 | 0,009 |

| **Propriétés du produit** | | | | | |
|---|---|---|---|---|---|
| Densité crue à l'état humide (g/cm³) | 2,99 | 2,99 | 2,98 | 2,98 | 2,98 |
| Humidité (% eau) | 2,5 | 2,5 | 2,5 | NM | 2,5 |
| Masse volumique apparente (g/cm³) | 2,93 | 2,92 | 2,96 | 2,90 | |
| Porosité ouverte (%) | 17,5 | 18,0 | 16,74 | 18,7 | 19,6 |
| P₅₀ pores (porosimétrie Hg) - microns | 13,5 | 24,1 | NM | NM | NM |
| P₈₀ pores en microns (porosimétrie Hg) - microns | 30 | 60 | NM | NM | NM |
| P₉₀ pores en microns (porosimétrie Hg) - microns | 50 | 100 | NM | NM | NM |
| MOR mesuré à 20°C (MPa) | 10,5 | 9,9 | 11,7 | 11,0 | 7,5 |
| MOR (MPa) mesuré à 20°C après trois chocs thermiques à 1200°C | 4,3 | 3,1 | 2,8 | 3,5 | 3,3 |
| Perte MOR après trois chocs thermiques à 1200°C (%) | -59 | -69 | -76 | -68 | -56 |
| MOR mesuré à 1200°C (MPa) | 8,7 | 8,5 | 11,2 | NM | 6,2 |
| MOR mesuré à 1400°C (MPa) | 8,0 | 6,5 | 4,5 | NM | 5,1 |
| Test corrosion vapeur d'eau Perte MOR avant / après corrosion (%) | -21 | -26 | NM | NM | NM |

| | | | | | |
|---|---|---|---|---|---|
| * : exemples hors invention ; NM : non mesuré | | | | | |

La **masse volumique** et la **porosité ouverte** sont mesurées selon la norme ISO5017 sur une éprouvette de dimension 20*20*80 mm³ prélevée à coeur de bloc.

Les **teneurs massiques** en oxyde Na₂O, CaO, K₂O, MgO, ZrO₂ Fe₂O₃ et autres oxydes mineurs sont mesurées par spectrométrie d'émission à plasma induit (ICP), la teneur en SiO₂ et la teneur en Al₂O₃ sont déterminées par spectroscopie à fluorescence de rayons X (XRF).

Le **module de rupture à 20°C** (MOR 20°C) est mesuré sous air sur une éprouvette de dimensions 80*20*20 mm³. Le montage en flexion 3 points est réalisé avec une distance de 60 mm entre les deux appuis inférieurs et la vitesse de descente du poinçon est égale à 0,5 mm/min, La valeur est une moyenne résultant de trois mesures successives.

Le **module de rupture à 1200°C ou à 1400°C** (MOR 1200°C et MOR 1400°C) est mesuré sous air sur une éprouvette de dimensions 80*20*20 mm³. Le montage en flexion 3 points est réalisé avec une distance de 70 mm entre les deux appuis inférieurs et la vitesse de descente du poinçon est égale à 0,5 mm/min. La valeur est une moyenne résultant de trois mesures successives.

**La perte relative de résistance à la flexion** (Perte MOR) a été mesurée selon l'essai normalisé PRE III.26/PRE/R.1.78. Cet essai permet de déterminer le comportement aux chocs thermiques par la perte relative de résistance à la flexion (MOR) après un ou plusieurs cycles consistant à chauffer l'éprouvette d'essai de la température ambiante à une température de 1200°C, à maintenir l'éprouvette à cette température pendant 30 minutes, puis à plonger l'éprouvette dans un bac de trempe d'eau froide. Les MOR avant et après les chocs thermiques sont mesurés selon le protocole décrit précédemment. La perte relative de résistance à la flexion est le rapport de la différence entre ces MOR sur le MOR avant application des chocs thermiques.

Le **test d'oxydation sous vapeur d'eau** permet d'évaluer en interne le comportement des produits dans les conditions d'application à des turbines à gaz. Le test d'oxydation s'effectue à 1400°C durant 500 heures sous vapeur d'eau avec un débit constant de 32kg/m³/h. La résistance à la corrosion est obtenue par mesure de la perte relative de résistance à la flexion entre un échantillon sain et un échantillon ayant subi le test d'oxydation.

L'exemple 1 selon l'invention présente un MOR à 20°C supérieur à 10 MPa et fournit les meilleurs résultats pour le MOR résiduel après trois chocs thermiques et le MOR à 1400°C tout en préservant une bonne résistance à la corrosion. Dans cet exemple, la teneur en Na₂O dans le granulat est inférieure à 0,09%, en pourcentage massique sur la base de la masse du produit, et la teneur en Na₂O dans le granulat d'alumine tabulaire, est inférieure à 0,05% en pourcentage massique sur la base de la masse du granulat. La comparaison des exemples 1 d'une part et 2 et 3 d'autre part montre qu'il est préférable de réduire la teneur en Na₂O.

L'exemple 4 avec une matrice ayant une teneur très faible en Na₂O présente un MOR résiduel après trois chocs thermiques significativement plus faible que celui du produit de l'exemple 1 selon l'invention qui comporte un granulat plus pur. La comparaison des exemples 1 et 4 montre ainsi qu'il est préférable de purifier plutôt le granulat que la matrice.

L'exemple 5 comparatif présente une matrice qui comporte moins de 0,010% de Na₂O, à la différence de l'exemple 1. Il en résulte une porosité ouverte plus élevée et un MOR à 20°C plus faible. Le MOR à 20°C comme le MOR résiduel après trois chocs thermiques sont trop faibles pour les applications visées.

Comme cela apparaît clairement à présent, l'invention fournit un produit parfaitement bien adapté aux applications visées, et en particulier à une turbine à gaz.

L'invention n'est cependant pas limitée à cette application.

## Revendications

1. Produit réfractaire fritté présentant la forme d'un bloc et constitué
- d'un granulat constitué par l'ensemble des grains présentant une taille supérieure à 100 µm, dits « grains grossiers », et
- d'une matrice liant lesdits grains grossiers et constituée des grains présentant une taille inférieure ou égale à 100 µm,
le granulat représentant entre 45% et 90% en masse du produit,
ledit produit présentant une composition telle que, en pourcentage massique sur la base des oxydes :
- Al₂O₃ > 80%,
- SiO₂ < 15%,
- Na₂O < 0,15%
- Fe₂O₃ < 0,05%,
- CaO < 0,1%,
- les autres oxydes constituant le complément à 100%,
la teneur en Na₂O dans la matrice étant supérieure à 0,010%, en pourcentage massique sur la base de la masse du produit.

2. Produit selon la revendication précédente, dans lequel
- Na₂O + K₂O < 0,20%,

3. Produit selon l'une quelconque des revendications précédentes, dans lequel
- Al₂O₃ > 85% et/ou
- 3% < SiO₂ < 10% et/ou
- Na₂O + K₂O < 0,15% et/ou
- Fe₂O₃ < 0,03% et/ou
- CaO < 0,05% et/ou
- ZrO₂ < 5% et/ou
- TiO₂ < 5%.

4. Produit selon l'une quelconque des revendications précédentes, dans lequel :
- Al₂O₃ > 90% et/ou
- SiO₂ > 7% et/ou
- Na₂O < 0,12% et/ou
- ZrO₂ < 1 % et/ou
- TiO₂ < 1%.

5. Produit selon l'une quelconque des revendications précédentes, dans lequel la teneur en Na₂O dans le granulat d'alumine est inférieure à 0,070%, en pourcentage massique sur la base de la masse du granulat.

6. Produit selon l'une quelconque des revendications précédentes, dans lequel la quantité totale d'alumine d'une part et de mullite et/ou de spinelle et/ou de mullite-zircone d'autre part est supérieure à 95%, en pourcentage massique sur la base de la masse des phases cristallisées.

7. Produit selon l'une quelconque des revendications précédentes, dans lequel la quantité de mullite est supérieure à 10% et inférieure à 50%, en pourcentage massique sur la base de la masse des phases cristallisées.

8. Produit selon l'une quelconque des revendications précédentes, présentant une porosité ouverte supérieure à 10% et inférieure à 30% en volume.

9. Produit selon l'une quelconque des revendications précédentes, présentant une porosité ouverte inférieure à 20% en volume.

10. Produit selon l'une quelconque des revendications précédentes, dans lequel la distribution de taille de pores, mesurée au porosimètre à mercure, est telle que
- P₅₀ est supérieur à 1 µm et inférieur à 20 µm, et/ou
- P₈₀ est supérieur à 10 µm et inférieur à 50 µm, et/ou
- P₉₀ est supérieur à 30 µm et inférieur à 70 µm.

11. Produit selon l'une quelconque des revendications précédentes, dans lequel le granulat est constitué, pour plus de 90% en masse des grains grossiers de mullite et/ou de grains grossiers d'alumine et/ou de grains grossiers de spinelle et/ou de grains grossiers de mullite-zircone.

12. Produit selon l'une quelconque des revendications précédentes, dans lequel la matrice est constituée pour plus de 90% en masse d'alumine.

13. Produit selon l'une quelconque des revendications précédentes, dans lequel les grains présentant une taille inférieure ou égale à 100 µm et supérieure à 10 µm représentent plus de 10% et moins de 30% de la masse du produit et/ou les grains présentant une taille inférieure ou égale à 10 µm représentent plus de 10% et moins de 30 % de la masse du produit.

14. Dispositif choisi dans le groupe formé par une turbine à gaz, un réacteur chimique, un support pour la cuisson, une superstructure de four verrier, ledit dispositif comportant une paroi au moins en partie constituée par un produit selon l'une quelconque des revendications précédentes

15. Dispositif selon la revendication immédiatement précédente, ledit réacteur chimique étant un réacteur de reformage secondaire pour la fabrication d'ammoniac ou de méthane, et le support de cuisson étant un support de cuisson pour pièces céramiques.

## Patentansprüche

1. Feuerfestes gesintertes Produkt welches die Form eines Blocks aufweist und gebildet ist
- aus einem Granulat gebildet durch die Gesamtheit der Körner welche eine Größe von größer als 100 µm aufweisen, genannt "grobe Körner", und
- aus einer Matrix welche die besagten groben Körner bindet und gebildet ist aus Körnern welche eine Größe von geringer als oder gleich 100 µm aufweisen,
wobei das Granulat zwischen 45 % und 90 % in Masse des Produktes darstellt, wobei das besagte Produkt eine Zusammensetzung aufweist so dass, in Massen-Prozentangabe auf Basis der Oxide:
- Al₂O₃ > 80 %,
- SiO₂ < 15 %,
- Na₂O < 0,15 %
- Fe₂O₃ < 0,05 %,
- CaO < 0,1 %,
- wobei die anderen Oxide das Komplement zu 100 % bilden,
Wobei der Gehalt an Na₂O in der Matrix größer als 0,010 % ist, in Massen-Prozentangabe auf Basis der Masse des Produktes.

2. Produkt nach dem vorhergehenden Anspruch, wobei
- Na₂O + K₂O < 0,20 %,

3. Produkt nach irgendeinem der vorhergehenden Ansprüche, wobei
- Al₂O₃ > 85 % und/oder
- 3 % < SiO₂ < 10 % und/oder
- Na₂O + K₂O < 0,15 % und/oder
- Fe₂O₃ < 0,03 % und/oder
- CaO < 0,05 % und/oder
- ZrO₂ < 5 % und/oder
- TiO₂ < 5 %.

4. Produkt nach irgendeinem der vorhergehenden Ansprüche, wobei
- Al₂O₃ > 90 % und/oder
- SiO₂ > 7 % und/oder
- Na₂O < 0,12 % und/oder
- ZrO₂ < 1 % und/oder
- TiO₂ < 1 %.

5. Produkt nach irgendeinem der vorhergehenden Ansprüche, wobei der der Gehalt an Na₂O in dem Granulat aus Aluminiumoxid geringer als 0,070 % ist, in Massen-Prozentangabe auf Basis der Masse des Granulats.

6. Produkt nach irgendeinem der vorhergehenden Ansprüche, wobei die Gesamtmenge an Aluminiumoxid auf der einen Seite und an Mullit und/oder an Spinell und/oder an Mullit-Zirkoniumoxid auf der anderen Seite größer ist als 95 %, in Massen-Prozentangabe auf Basis der Masse der kristallisierten Phasen.

7. Produkt nach irgendeinem der vorhergehenden Ansprüche, wobei die Menge an Mullit größer ist als 10 % und geringer als 50 %, in Massen-Prozentangabe auf Basis der Masse der kristallisierten Phasen.

8. Produkt nach irgendeinem der vorhergehenden Ansprüche, welches eine offene Porosität von größer als 10 % und geringer als 30 % in Volumen aufweist.

9. Produkt nach irgendeinem der vorhergehenden Ansprüche, welches eine offene Porosität von geringer als 20 % in Volumen aufweist.

10. Produkt nach irgendeinem der vorhergehenden Ansprüche, wobei die Größenverteilung der Poren, gemessen am Quecksilber-Porosimeter, so ist, dass
- P₅₀ größer ist als 1 µm und geringer als 20 µm, und/oder
- P₈₀ größer ist als 10 µm und geringer als 50 µm, und/oder
- P₉₀ größer ist als 30 µm und geringer als 70 µm.

11. Produkt nach irgendeinem der vorhergehenden Ansprüche, wobei das Granulat gebildet ist, zu mehr als 90 % in Masse aus groben Teilchen aus Mullit und/oder aus groben Teilchen aus Aluminiumoxid und/oder aus groben Teilchen aus Spinell und/oder aus groben Teilchen aus Mullit-Zirkoniumoxid.

12. Produkt nach irgendeinem der vorhergehenden Ansprüche, wobei die Matrix zu mehr als 90 % in Masse aus Aluminiumoxid gebildet ist.

13. Produkt nach irgendeinem der vorhergehenden Ansprüche, wobei die Körner welche eine Größe von geringer als oder gleich 100 µm und größer als 10 µm aufweisen, mehr als 10 % und weniger als 30 % der Masse des Produktes darstellen und/oder die Körner welche eine Größe von geringer als oder gleich 10 µm aufweisen, mehr als 10 % und weniger als 30 % der Masse des Produktes darstellen.

14. Vorrichtung ausgewählt aus der Gruppe gebildet durch eine Gasturbine, einem chemischen Reaktor, einem Brennträger, einem Glasofen-Überbau, wobei die besagte Vorrichtung eine mindestens zum Teil aus einem Produkt nach irgendeinem der vorhergehenden Ansprüche gebildete Wand enthält.

15. Vorrichtung nach dem unmittelbar vorhergehenden Anspruch, wobei der besagte chemische Reaktor ein Reaktor der sekundären Reformierung für die Herstellung von Ammoniak oder von Methan ist, und der Brennträger ein Träger für das Brennen von keramischen Werkstücken ist.

## Claims

1. A sintered refractory product having the shape of a block and consisting of:
- an aggregate formed by all the grains having a size of greater than 100 µm, referred to as "coarse grains", and
- a matrix bonding said coarse grains and consisting of grains having a size of less than or equal to 100 µm,
the aggregate representing between 45% and 90% by weight of the product, said product having a composition such that, as a weight percentage on the basis of the oxides:
- Al₂O₃ > 80%,
- SiO₂ < 15%,
- Na₂O < 0.15%
- Fe₂O₃ < 0.05%,
- CaO < 0.1%,
- the other oxides constituting the balance to 100%,
the content of Na₂O in the matrix being greater than 0.010%, as a weight percentage on the basis of the weight of the product.

2. The product as claimed in the preceding claim, wherein:
- Na₂O + K₂O < 0.20%.

3. The product as claimed in either one of the preceding claims, wherein:
- Al₂O₃ > 85% and/or
- 3% < SiO₂ < 10% and/or
- Na₂O + K₂O < 0.15% and/or
- Fe₂O₃ < 0.03% and/or
- CaO < 0.05% and/or
- ZrO₂ < 5% and/or
- TiO₂ < 5%.

4. The product as claimed in any one of the preceding claims, wherein:
- Al₂O₃ > 90% and/or
- SiO₂ > 7% and/or
- Na₂O < 0.12% and/or
- ZrO₂ < 1% and/or
- TiO₂ < 1%.

5. The product as claimed in any one of the preceding claims, wherein the content of Na₂O in the alumina aggregate is less than 0.070%, as a weight percentage on the basis of the weight of the aggregate.

6. The product as claimed in any one of the preceding claims, wherein the total amount of alumina on the one hand and of mullite and/or spinel and/or mullite-zirconia on the other hand is greater than 95%, as a weight percentage on the basis of the weight of the crystalline phases.

7. The product as claimed in any one of the preceding claims, wherein the amount of mullite is greater than 10% and less than 50%, as a weight percentage on the basis of the weight of the crystalline phases.

8. The product as claimed in any one of the preceding claims, having an open porosity of greater than 10% and less than 30% by volume.

9. The product as claimed in any one of the preceding claims, having an open porosity of less than 20% by volume.

10. The product as claimed in any one of the preceding claims, wherein the pore size distribution, measured using a mercury porosimeter, is such that:
- P₅₀ is greater than 1 µm and less than 20 µm, and/or
- P₈₀ is greater than 10 µm and less than 50 µm, and/or
- P₉₀ is greater than 30 µm and less than 70 µm.

11. The product as claimed in any one of the preceding claims, wherein the aggregate consists, for more than 90% by weight, of coarse mullite grains and/or of coarse alumina grains and/or of coarse spinel grains and/or of coarse mullite-zirconia grains.

12. The product as claimed in any one of the preceding claims, wherein the matrix consists, for more than 90% by weight, of alumina.

13. The product as claimed in any one of the preceding claims, wherein the grains having a size less than or equal to 100 µm and greater than 10 µm represent more than 10% and less than 30% of the weight of the product and/or the grains having a size less than or equal to 10 µm represent more than 10% and less than 30% of the weight of the product.

14. A device selected from the group formed by a gas turbine, a chemical reactor, a firing support and a glass furnace superstructure, said device comprising one wall at least partly formed by a product according to any one of the preceding claims.

15. The device as claimed in the immediately preceding claim, said chemical reactor being a secondary reforming reactor for the manufacture of ammonia or methane, and the firing support being a firing support for ceramic parts.
